# EUROPÄISCHE PATENTSCHRIFT

(11) **EP 3 084 860 B1**
(45) Veröffentlichungstag und Bekanntmachung des Hinweises auf die Patenterteilung: **22.11.2017**
(21) Anmeldenummer: 14824422.1
(22) Anmeldetag: 16.12.2014
(51) Int. Cl.: H01M 2/30, H01R 11/28

(54) **BATTERIEKLEMME**
BATTERY TERMINAL
BORNE DE BATTERIE

(30) Priorität: 17.12.2013 DE 102013114216
(43) Veröffentlichungstag der Anmeldung: 26.10.2016
(73) Patentinhaber: Schulte & Co. GmbH, 58675 Hemer (DE)
(72) Erfinder: OTTO, Adrian, 58675 Hemer (DE); PASCHWITZ, Stefan, 58706 Menden (DE)
(74) Vertreter: Schröter & Albrecht
(86) Internationale Anmeldenummer: PCT/EP2014/078030
(87) Internationale Veröffentlichungsnummer: WO 2015/091526

(56) Entgegenhaltungen:
- EP-A1- 2 388 862
- DE-U1-202005 006 400
- FR-A- 820 629
- US-A- 1 691 079
- US-A1- 2007 264 883

## Beschreibung

Die vorliegende Erfindung betrifft eine Batterieklemme mit einem Anschlussbereich, mit dem im bestimmungsgemäßen Zustand eine Anschlussleitung verbunden ist, einem im bestimmungsgemäßen Zustand auf einen Pol einer Batterie aufgesetzten, hülsenförmig ausgebildeten und zur Veränderung seines Innendurchmessers mit einem durchgehenden Schlitz versehenen Polkontaktbereich, einem mit dem Polkontaktbereich verbundenen Spannbereich, der einen ersten Spannschenkel und einen zweiten Spannschenkel umfasst, die sich beidseitig des Schlitzes ausgehend von dem Polkontaktbereich erstrecken, einander gegenüber angeordnet und jeweils mit einer Spannschraubenaufnahmeöffnung versehen sind, und einer Spannschraube, die im bestimmungsgemäßen Zustand in den Aufnahmeöffnungen der Spannschenkel aufgenommen ist und die Spannschenkel derart miteinander verbindet, dass der Innendurchmesser des Polkontaktbereiches durch Anziehen oder Lösen der Spannschraube veränderbar ist.

Batterieklemmen sind im Stand der Technik in unterschiedlichsten Ausgestaltungen bekannt. Sie dienen dazu, eine Anschlussleitung elektrisch mit dem Pol einer Fahrzeugbatterie zu verbinden. Hierzu wird die Anschlussleitung elektrisch mit dem Anschlussbereich der Batterieklemme verbunden, und der Polkontaktbereich wird auf den Batteriepol aufgesetzt. Zur Befestigung des Polkontaktbereiches an dem Batteriepol wird dann die Spannschraube angezogen, welche zur Verringerung des Innendurchmessers des Polkontaktbereiches die Spannschenkel aufeinander zu bewegt, wodurch eine Klemmwirkung erzielt wird.

Bekannte Batterieklemmen bestehen normalerweise aus mehreren Bauteilen. Der Anschlussbereich, der Polkontaktbereich und der Spannbereich sind meist einteilig als Gussteil oder als Biegeteil aus einem Blech hergestellt. Die Spannschraube wird über eine Mutter mit Unterlegscheibe befestigt, so dass mindestens vier Bauteile vorhanden sind.

Die Druckschriften DE 20 2005 006 400 U1, US 1691079 A, FR 820629 A und US 2007/264883 A1 offenbaren Beispiele bekannter Batterieklemmen.

Ein Nachteil vieler Batterieklemmen besteht darin, dass ihre Handhabung recht aufwendig ist. Nach dem Aufsetzen des Polkontaktbereiches auf den zugehörigen Batteriepol muss die Spannschraube zunächst in die in den Spannschenkeln ausgebildeten Aufnahmeöffnungen eingesetzt werden. Daraufhin wird die Unterlegscheibe aufgeschoben und die Mutter aufgeschraubt. Die Schraube, die Unterlegscheibe und/oder die Mutter können während der Montage oder Demontage herunterfallen, womit zeitliche Verzögerungen einhergehen. Auch können Bauteile verloren gehen. In diesem Zusammenhang ist es bekannt, die Schraube verliersicher an einem der Spannschenkel anzuordnen.

Ausgehend von diesem Stand der Technik ist es eine Aufgabe der vorliegenden Erfindung, eine Batterieklemme der eingangs genannten Art zu schaffen, die einfach zu handhaben ist.

Zur Lösung dieser Aufgabe schafft die vorliegende Erfindung eine Batterieklemme nach Anspruch 1. Ein solches Innengewinde macht sowohl den Einsatz einer Mutter als auch den einer Unterlegscheibe überflüssig, weshalb die erfindungsgemäße Batterieklemme eine sehr geringe Anzahl von Einzelbauteilen aufweist, was sich positiv auf die Produktion, die Lagerung und auch die Kosten der Batterieklemme auswirkt. Darüber hinaus sind weniger Bauteile vorhanden, die während der Montage herunterfallen können, was zu einer einfachen Handhabung der erfindungsgemäßen Batterieklemme führt.

Gemäß einer bevorzugten Ausführungsform der vorliegenden Erfindung sind der Anschlussbereich, der Polkontaktbereich und der Spannbereich einteilig, insbesondere aus einem elektrisch leitenden Blech hergestellt, beispielsweise aus einem Kupferblech, wodurch ein einfacher und preiswerter Aufbau erzielt und die Anzahl von Bauteilen weiter reduziert wird. Die einteilige Ausbildung aus einem Blech erfolgt mittels Stanzen, Schneiden, Biegen, Tiefziehen und/oder Umformen.

Die Aufnahmeöffnung des ersten Spannschenkels ist vorteilhaft durch einen vorstehenden Bund definiert, um ausreichend Platz für die Herstellung des Innengewindes bereitzustellen. Das Innengewinde kann in den Bund geschnitten oder geformt werden.

Erfindungsgemäß ist die Spannschraube verliersicher an dem zweiten Spannschenkel gehalten. Dies führt dazu, dass kein Bauteil der erfindungsgemäßen Batterieklemme während der Montage herabfallen kann, wodurch die Handhabung wesentlich verbessert wird.

Die Spannschraube ist als Flanschschraube ausgebildet, wobei der zweite Spannschenkel zwei einander gegenüber angeordnete, auswärts vorstehende, den Schraubenflansch umgreifende Haltevorsprünge aufweist, welche die Flanschschraube insbesondere klemmend an dem Spannschenkel halten, wodurch ein sehr zuverlässiger Halt der Spannschraube am zweiten Spannschenkel erzielt wird.

Gemäß einer Ausgestaltung der vorliegenden Erfindung ist das Gewinde im Bereich des freien Endes der Spannschraube plastisch verformt, wodurch eine Verliersicherung erzeugt wird.

Gemäß einer Ausgestaltung der vorliegenden Erfindung ist an einem der Spannschenkel ein in ein Richtung des anderen Spannschenkels vorstehender Abstützvorsprung vorgesehen, über den sich die beiden Spannschenkel gegeneinander abstützen, wenn die Spannschraube vollständig angezogen ist, wodurch zum einen eine ordnungsgemäße Ausrichtung der Spannschenkel zueinander und zum anderen eine sichere Spannverbindung gewährleistet wird.

Weitere Merkmale und Vorteile der vorliegenden Erfindung werden anhand der nachfolgenden Beschreibung von Ausführungsformen einer erfindungsgemäßen Batterieklemme unter Bezugnahme auf die beiliegende Zeichnung deutlich. Darin ist
- Figur 1: eine perspektivische Ansicht einer Batterieklemme gemäß einer ersten Ausführungsform der vorliegenden Erfindung;
- Figur 2: eine Seitenansicht der in Figur 1 dargestellten Batterieklemme;
- Figur 3: eine Unteransicht der in Figur 1 dargestellten Batterieklemme;
- Figur 4: eine Vorderansicht der in Figur 1 dargestellten Batterieklemme; und
- Figur 5: eine perspektivische Ansicht einer Batterieklemme gemäß einer zweiten Ausführungsform der vorliegenden Erfindung.

Die Batterieklemme 1 umfasst einen Anschlussbereich 2, einen Polkontaktbereich 3 und einen Spannbereich 4, die einteilig aus einem elektrisch leitenden Blech hergestellt sind, bei dem es sich vorliegend um ein Kupferblech handelt. Es sollte allerdings klar sein, dass auch andere elektrisch leitende Blechmaterialien verwendet werden können. Ferner umfasst die Batterieklemme 1 eine als Flanschschraube ausgebildete und einen Schraubenflansch 5 aufweisende Spannschraube 6, die am Spannbereich 4 gehalten ist.

Der Anschlussbereich 2 ist im bestimmungsgemäßen Zustand mit einer nicht näher dargestellten Anschlussleitung verbunden, die an eine ebenfalls nicht näher dargestellte Batterie angeschlossen werden soll. Der Anschlussbereich 2 kann zur Anbindung der Anschlussleitung unterschiedlichste Formgebungen aufweisen, worauf nachfolgend nicht näher eingegangen wird, da die Formgebung des Anschlussbereiches 2 für die vorliegende Erfindung nicht von wesentlicher Bedeutung ist.

Der Polkontaktbereich 3 dient zur Aufnahme eines Batteriepols. Hierzu ist der Polkontaktbereich 3 hülsenförmig ausgebildet und zur Veränderung seines Innendurchmessers mit einem durchgehenden Schlitz 7 versehen.

Der mit dem Polkontaktbereich 3 verbundene Spannbereich 4 weist einen ersten Spannschenkel 8 und einen zweiten Spannschenkel 9 auf, die sich beidseitig des Schlitzes 7 ausgehend von dem Polkontaktbereich 3 erstrecken, einander gegenüber angeordnet und jeweils mit einer Spannschraubenaufnahmeöffnung 10, 11 versehen sind. Die Spannschraubenaufnahmeöffnung 10 des ersten Spannschenkels 8 ist durch einen vorstehenden Bund 12 definiert, dessen Innenfläche mit einem durch Schneiden oder Umformen hergestellten Innengewinde 13 versehen ist. Am zweiten Spannschenkel 9 sind seitlich zwei aufwärts vorstehende Haltevorsprünge 14 ausgebildet, die den Schraubenflansch 5 der Spannschraube 6 umgreifen, so dass diese verliersicher am zweiten Spannschenkel 9 gehalten ist. Das freie Ende des zweiten Spannschenkels 9 ist abwärts in Richtung des ersten Spannschenkels 8 umgebogen, wodurch ein Abstützvorsprung 15 gebildet wird, der einen minimalen Abstand zwischen den Spannschenkeln 8 und 9 definiert.

Zur Montage der Batterieklemme 1 zusammen mit einer am Anschlussbereich angebundenen Anschlussleitung am Pol einer Batterieklemme wird in einem ersten Schritt der Polkontaktbereich 3 über den Batteriepol gestülpt. Anschließend wird die Spannschraube unter Verringerung des Innendurchmessers des Polkontaktbereiches 3 angezogen, bis der Polkontaktbereich 3 den Batteriepol fest umschließt. Beim vollständigen Anziehen der Spannschraube kommt der Abstützvorsprung 15 mit dem ersten Spannschenkel 8 in Kontakt, wodurch verhindert wird, dass die Spannschenkel 8 und 9 relativ zueinander verkippen können. Auf diese Weise wird eine ordnungsgemäße Montage sichergestellt.

Ein wesentlicher Vorteil der erfindungsgemäßen Batterieklemme 1 besteht darin, dass diese lediglich zwei Bauteile aufweist, was positive Auswirkungen auf die Herstellung, Lagerung, Handhabung und Kosten hat. Dank der durch die Haltevorsprünge 14 gebildeten Verliersicherung bildet die Batterieklemme 1 eine Einheit. Es können keine Bauteile herabfallen oder gar verloren gehen.

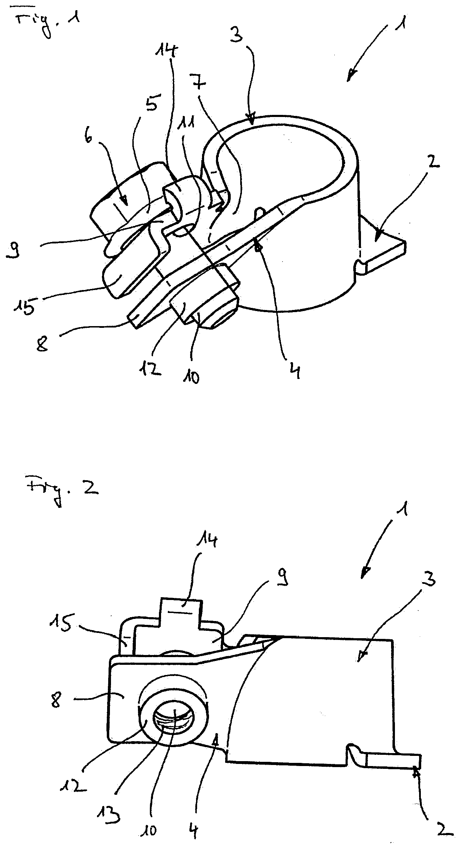

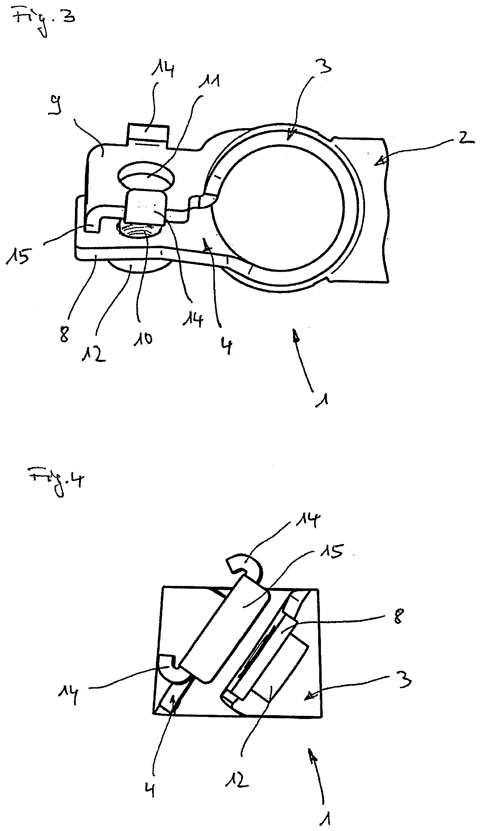

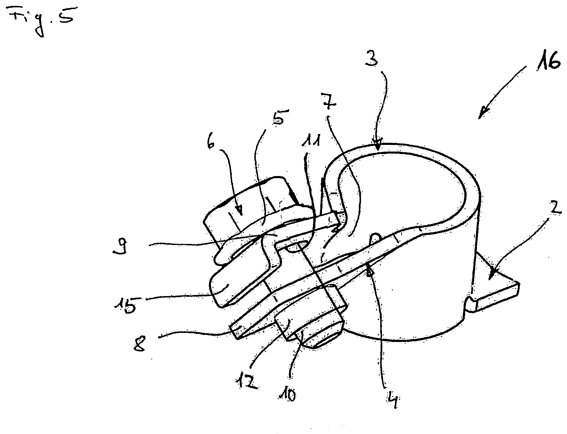

Figur 5 zeigt eine Batterieklemme 16 gemäß einer zweiten Ausführungsform der vorliegenden Erfindung. Die Batterieklemme 16 entspricht in wesentlichen Teilen der in den Figuren 1 bis 4 dargestellte Batterieklemme 1, weshalb gleiche oder gleichartige Bauteile bzw. Bauteilbereiche mit gleichen Bezugsziffern bezeichnet sind und nicht erneut beschrieben werden. Die Batterieklemme 16 unterscheidet sich dahingehend von der Batterieklemme 1, dass diese keine Haltevorsprünge 14 aufweist. Stattdessen ist das Gewinde im Bereich des freien Endes der Spannschraube 6 plastisch verformt, was in der Praxis auch als Vertaumeln bezeichnet wird. Aufgrund dieser plastischen Verformung kann das freie Ende der Spannschraube 6 das Innengewinde 13 nicht passieren, wodurch eine Verliersicherung erzielt wird. Ein wesentlicher Vorteil einer solchen plastischen Verformung der Spannschraube 6 gegenüber der Anordnung von Haltevorsprüngen 14 besteht darin, dass die plastische Verformung der Spannschraube 6 einfacher und preiswerter hergestellt werden kann. Zudem kann die plastische Verformung der Spannschraube 6 die Dehnbarkeit der Spannschraube 6 nicht einschränken.

### BEZUGSZIFFERNLISTE

- 1: Batterieklemme
- 2: Anschlussbereich
- 3: Polkontaktbereich
- 4: Spannbereich
- 5: Schraubenflansch
- 6: Spannschraube
- 7: Schlitz
- 8: Spannschenkel
- 9: Spannschenkel
- 10: Spannschraubenaufnahmeöffnung
- 11: Spannschraubenaufnahmeöffnung
- 12: Bund
- 13: Innengewinde
- 14: Haltevorsprünge
- 15: Abstützvorsprung
- 16: Batterieklemme

## Patentansprüche

1. Batterieklemme (1; 16) mit einem Anschlussbereich (2), mit dem im bestimmungsgemäßen Zustand eine Anschlussleitung verbunden ist, einem im bestimmungsgemäßen Zustand auf einen Pol einer Batterie aufgesetzten, hülsenförmig ausgebildeten und zur Veränderung seines Innendurchmessers mit einem durchgehenden Schlitz (7) versehenen Polkontaktbereich (3), einem mit dem Polkontaktbereich (3) verbundenen Spannbereich (4), der einen ersten Spannschenkel (8) und einen zweiten Spannschenkel (9) umfasst, die sich beidseitig des Schlitzes (7) ausgehend von dem Polkontaktbereich (3) erstrecken, einander gegenüber angeordnet und jeweils mit einer Spannschraubenaufnahmeöffnung (10, 11) versehen sind, und einer Spannschraube (6), die im bestimmungsgemäßen Zustand in den Spannschraubenaufnahmeöffnungen (10, 11) der Spannschenkel (8, 9) aufgenommen ist und die Spannschenkel (8, 9) derart miteinander verbindet, dass der Innendurchmesser des Polkontaktbereiches (3) durch Anziehen oder Lösen der Spannschraube (6) veränderbar ist, **dadurch gekennzeichnet, dass** die Spannschraubenaufnahmeöffnung (10) des ersten Spannschenkels (8) mit einem Innengewinde (13) versehen und die Spannschraube (6) verliersicher an dem zweiten Spannschenkel (9) gehalten ist, wobei die Spannschraube (6) als Flanschschraube ausgebildet ist, und wobei der zweite Spannschenkel (9) zwei einander gegenüber angeordnete auswärts vorstehende, den Schraubenflansch (5) umgreifende Haltevorsprünge (14) aufweist.

2. Batterieklemme (1; 16) nach Anspruch 1, **dadurch gekennzeichnet, dass** der Anschlussbereich (2), der Polkontaktbereich (3) und der Spannbereich (4) einteilig aus einem elektrisch leitenden Blech hergestellt sind, insbesondere aus einem Kupferblech.

3. Batterieklemme (1; 16) nach Anspruch 2, **dadurch gekennzeichnet, dass** die Spannschraubenaufnahmeöffnung (10) des ersten Spannschenkels (8) durch einen vorstehenden Bund (12) definiert ist.

4. Batterieklemme (16) nach einem der vorhergehenden Ansprüche, **dadurch gekennzeichnet, dass** das Gewinde im Bereich des freien Endes der Spannschraube (6) plastisch verformt ist.

5. Batterieklemme (1; 16) nach einem der vorhergehenden Ansprüche, **dadurch gekennzeichnet, dass** an einem der Spannschenkel (9) ein in Richtung des anderen Spannschenkels (8) vorstehender Abstützvorsprung (15) vorgesehen ist.

## Claims

1. A battery terminal (1; 16) with a connection region (2) to which, in the intended state, a connection line is connected, a sleeve-like pole contact region (3) which, in the intended state, is placed on a pole of a battery and, in order to change its internal diameter, is provided with a continuous slot (7), a clamping region (4) connected to the pole contact region (8) and which comprises a first clamping arm (8) and second clamping arm (9) which extend from the pole contact region (3) on either side of the slot (7), are positioned opposite one another and are each provided with a clamping screw receiving opening (10, 11), and a clamping screw (6) which, in the intended state, is received in the clamping screw receiving openings (10, 11) of the clamping arms (8, 9) and connects the clamping arms (8, 9) to one another such that the internal diameter of the pole contact region (3) can be changed by tightening or loosening the clamping screw (6), **characterised in that** the clamping screw receiving opening (10) of the first clamping arm (8) is provided with an internal thread (13) and the clamping screw (6) is held undetachably on the second clamping arm (9), the clamping screw (6) being in the form of a flange screw, and the second clamping arm (9) having two outwardly protruding holding projections (14) that are positioned opposite one another and encompass the screw flange (5).

2. The battery terminal (1; 16) according to Claim 1, **characterised in that** the connection region (2), the pole contact region (3) and the clamping region (4) are produced in one part from an electrically conductive sheet metal, in particular from a copper sheet.

3. The battery terminal (1; 16) according to Claim 2, **characterised in that** the clamping screw receiving opening (10) of the first clamping arm (8) is defined by a protruding collar (12).

4. The battery terminal (16) according to any of the preceding claims, **characterised in that** the thread in the region of the free end of the clamping screw (6) is deformed plastically.

5. The battery terminal (1; 16) according to any of the preceding claims, **characterised in that** a supporting projection (15) protruding in the direction of one clamping arm (8) is provided on the other clamping arm (9).

## Revendications

1. Borne de batterie (1 ; 16) comprenant une zone de connexion (2) à laquelle, à l'état conforme à l'emploi, est raccordée une ligne de connexion, comprenant une zone de contact de pôle (3), posée sur un pôle d'une batterie à l'état conforme à l'emploi, réalisée en forme de douille et munie d'une fente (7) continue pour modifier son diamètre intérieur, comprenant une zone de serrage (4) reliée à la zone de contact de pôle (3), laquelle présente un premier côté de serrage (8) et un deuxième côté de serrage (9), lesquels s'étendent de chaque côté de la fente (7) en partant de la zone de contact de pôle (3), lesquels sont disposés l'un en face de l'autre et sont respectivement munis d'une ouverture de logement de vis de serrage (10, 11), et comprenant une vis de serrage (6) qui, à l'état conforme à l'emploi, est logée dans les ouvertures de logement de vis de serrage (10, 11) des côtés de serrage (8, 9) et relie entre eux les côtés de serrage (8, 9) de manière à ce que le diamètre intérieur de la zone de contact de pôle (3) soit modifiable par serrage ou desserrage de la vis de serrage (6), **caractérisée en ce que** l'ouverture de logement de vis de serrage (10) du premier côté de serrage (8) est munie d'un filetage intérieur (13) et **en ce que** la vis de serrage (6) est maintenue sur le deuxième côté de serrage (9) de manière imperdable, la vis de serrage (6) étant réalisée comme vis à bride, et le deuxième côté de serrage (9) présentant deux saillies de maintien (14) faisant saillie vers l'extérieur en étant disposées l'une en face de l'autre, entourant la bride de vis (5).

2. Borne de batterie (1 ; 16) selon la revendication 1, **caractérisée en ce que** la zone de connexion (2), la zone de contact de pôle (3) et la zone de serrage (4) sont fabriquées d'une seule pièce d'une tôle électroconductrice, notamment d'une tôle de cuivre.

3. Borne de batterie (1 ; 16) selon la revendication 2, **caractérisée en ce que** l'ouverture de logement de vis de serrage (10) du premier côté de serrage (8) est définie par un collet (12) en saillie.

4. Borne de batterie (16) selon l'une quelconque des revendications précédentes, **caractérisée en ce que** le filetage dans la zone de l'extrémité libre de la vis de serrage (6) est plastiquement déformé.

5. Borne de batterie (1 ; 16) selon l'une quelconque des revendications précédentes, **caractérisée en ce que** une saillie de soutien (15) faisant saillie en direction de l'autre côté de serrage (8) est prévue sur un des côtés de serrage (9).
